# EUROPÄISCHE PATENTSCHRIFT

(11) **EP 2 710 256 B1**
(45) Veröffentlichungstag und Bekanntmachung des Hinweises auf die Patenterteilung: **01.07.2015**
(21) Anmeldenummer: 12729846.1
(22) Anmeldetag: 02.05.2012
(51) Int. Cl.: F03D 1/06

(54) **BEFESTIGUNG VON ROTORBLÄTTERN AUF DER NABE VON WINDENERGIEANLAGEN**
FASTENING OF ROTOR BLADES TO THE HUB OF WIND TURBINES
FIXATION DE PALES AU MOYEU D'UNE ÉOLIENNE

(30) Priorität: 17.05.2011 DE 202011100897 U
(43) Veröffentlichungstag der Anmeldung: 26.03.2014
(73) Patentinhaber: Windnovation Engineering Solutions GmbH, 10243 Berlin (DE)
(72) Erfinder: STOER, Roland, 10243 Berlin (DE)
(74) Vertreter: Kietzmann, Manfred
(86) Internationale Anmeldenummer: PCT/DE2012/000465
(87) Internationale Veröffentlichungsnummer: WO 2012/155881

(56) Entgegenhaltungen:
- EP-A2- 1 840 372
- WO-A1-2004/106732
- DE-A1-102006 022 272
- DE-C1- 19 733 372

## Beschreibung

Bei der Befestigung von Rotorblättern auf der Nabe von Windenergieanlagen ist es bekannt, im Bereich der Rotorblattwurzel in im Wesentlichen quer zur Längsachse des Rotorblattes befindlichen Ausnehmungen Querbolzen anzuordnen, die mittels eines Zugankers (Dehnbolzen) mit der Rotornabe verbunden werden. Der Zugang des Zugankers zum Querbolzen wird gemäß der DE 31 03 710 C2 durch einen Durchgang in der Schalenwand der Rotorblattwurzel erreicht.

Der Nachteil dieser Konstruktion soll gemäß der DE 197 33 372 C1 darin bestehen, dass das Rotorblatt im Bereich der Blattwurzel durch die Durchgangsbohrung zur Aufnahme der Querbolzen stark geschwächt wird. Als Lösung wird hier vorgeschlagen, die Durchgangsbohrung in Form von zwei Sacklöchern auszuführen und jeweils einen Zuganker in zwei gesonderten Durchgängen zu den in den Sachlöchern angeordneten Querbolzen anzuordnen.

Da diese doppelten Durchgänge ebenfalls eine Materialschwächung der Blattwurzel nach sich ziehen, wird in der WO/2004/106732 A1 dann vorgeschlagen, wieder auf einen durchgehenden Querbolzen zurückzugreifen, die Zuganker aber außerhalb der Blattwurzel anzuordnen.

Der Nachteil dieser Lösung besteht darin, dass der Biegemomentenverlauf durch den größeren Abstand der Anschlüsse der Zuganker an den jeweiligen Querbolzen einen vergleichsweis großen Querbolzendurchmesser erforderlich macht. Ferner weist diese Lösung die größte Flächenpressung am Laminatrand der Blattwurzelschalenwand auf.

Aufgabe der vorliegenden Erfindung ist es, diese Nachteile zu beseitigen.

Gelöst wird diese Aufgabe mit den Merkmalen des Anspruches 1, vorteilhafte Ausgestaltungen sind Gegenstand der Unteransprüche.

Erfindungsgemäß wird zur Befestigung von Rotorblättern auf der Rotornabe von Windenergieanlagen mittels Querbolzen und Zugankern im Bereich der Blattwurzel, wobei die Querbolzen durch die Blattwurzelschalenwand durchgehend angeordnet sind und mittels der Zuganker in Form von Dehnschrauben mit einem Flansch der Nabe verbindbar sind, vorgeschlagene dass jeder Querbolzen durch zwei Zuganker mit dem Flansch der Rotornabe verbindbar ist, wobei jeder Zuganker in einer gesonderten Zugankerbohrung in der Blattwurzelschalenwand angeordnet ist.

Gegenüber den im Stand der Technik genannten Lösungen wurde überraschenderweise gefunden, dass durch die vorgeschlagene Anbindung des Rotorblattes über zwei Zuganker, die jeweils in einer gesonderten Durchgangsbohrung angeordnet und mit einem die Blattwurzelschalenwand durchdringenden Querbo!lzen verbindbar sind, eine Optimierung der in der Blattwurzelschale eingeleiteten Kräfte und damit der Spannungsverhältnisse möglich ist.

Eine hohe Flächenpressung an den strukturell kritischen Laminaträndern der Blattwurzelschalenwand lässt sich so vermeiden und in das Innere der Blattwurzelschalenwand verschieben.

Weiter lassen sich die Durchmesser sowohl der Querbolzen als auch der Zuganker verringern, so dass die bisher als problematisch angesehene Querschnittsverringerung innerhalb der Blattwurzel eine größere Verteilung erfährt und damit kompensierbar ist.

Je nach Anwendungsfall sind drei Varianten vorgesehen:
Die Zugankerbohrungen weisen den gleichen Abstand von der äußeren bzw. inneren Mantellinie der Blattwurzelschalenwand auf, oder
   der Abstand der inneren Zugankerbohrung zur inneren Mantellinie der Blattwurzelschalenwand ist kleiner als der Abstand der äußeren Zugankerbohrung zur äußeren Mantellinie der Blattwurzelschalenwand oder
   der Abstand der inneren Zugankerbohrung zur inneren Mantellinie der Blattwurzelschalenwand ist größer als der Abstand der äußeren Zugankerbohrung zur äußeren Mantellinie der Blattwurzelschalenwand.

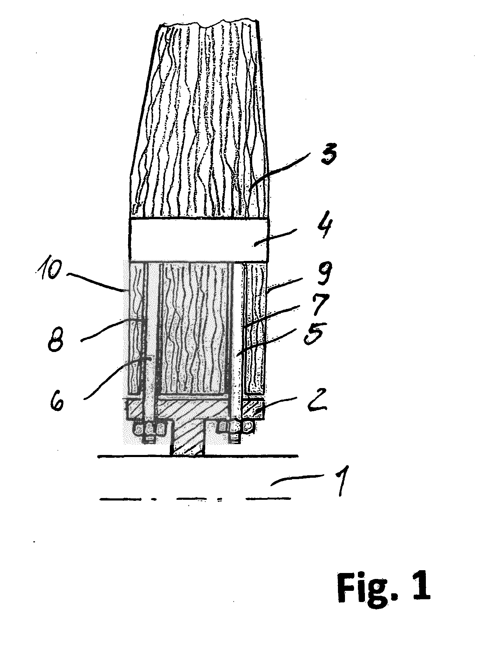

Ein Anwendungsbeispiel ist in der Zeichnung dargestellt.

Die Fig. zeigt eine Rotornabe 1 von Windenergieanlagen mit einem ringförmigen Flansch 2 zur Befestigung der Blattwurzel eines Rotorblattes. Von der Blattwurzel ist nut eine Blattwurzelschalenwand 3 dargestellt.

Die Befestigung des Rotorblattes erfolgt mittels Querbolzen 4 und Zugankern 5, 6 im Bereich der Blattwurzel, wobei die Querbolzen 7 durch die Blattwurzelschalenwand 3 durchgehend angeordnet sind.
Mittels der Zuganker 5, 6 in Form von Dehnschrauben ist der Querbolzen 4 mit dem Flansch 2 verbindbar, wobei jeder Querbolzen 4 durch zwei Zuganker 5, 6 mit dem Flansch 2 der Rotornabe 1 verbunden wird und jeder Zuganker 5, 6 in einer gesonderten Zugankerbohrung 7, 8 in der Blattwurzelschalenwand 3 angeordnet ist.
In der Darstellung weisen die Zugankerbohrungen 7, 8 den gleichen Abstand von der äußeren bzw. inneren Mantellinie 9, 10 der Blattwurzelschalenwand 3 auf.

### Bezugszeichenliste

- 1: Rotornabe
- 2: Flansch der Rotornabe
- 3: Blattwurzelschalenwand
- 4: Querbolzen
- 5: Zuganker
- 6: Zuganker
- 7: Zugankerbohrung
- 8: Zugankerbohrung
- 9: äußerte Mantellinie der Blattwurzelschalenwand
- 10: innere Mantellinie der Blattwurzelschalenwand

## Patentansprüche

1. Befestigung von Rotorblättern auf der Rotornabe (1) von Windenergieanlagen mittels Querbolzen (4) und Zugankern (5,6) im Bereich der Blattwurzel, wobei die Querbolzen (4) durch die Blattwurzelschalenwand (3) durchgehend angeordnet sind und mittels der Zuganker (5,6) in Form von Dehnschrauben mit einem Flansch (2) der Nabe (1) verbindbar sind, **dadurch gekennzeichnet, dass**
jeder Querbolzen (4) durch zwei Zuganker (5, 6) mit dem Flansch (2) der Rotornabe (1) verbindbar ist, wobei jeder Zuganker (5, 6) in einer gesonderten Zugankerbohrung (7, 8) in der Blattwurzelschalenwand (3) angeordnet ist.

2. Befestigung nach Anspruch 1, **dadurch gekennzeichnet, dass**
die Zugankerbohrungen (7, 8) den gleichen Abstand von der äußeren bzw. inneren Mantellinie (9, 10) der Blattwurzelschalenwand (3) aufweisen.

3. Befestigung nach Anspruch 1, **dadurch gekennzeichnet, dass**
der Abstand der inneren Zugankerbohrung (8) zur inneren Mantellinie (10) der Blattwurzelschalenwand (3) kleiner ist als der Abstand der äußeren Zugankerbohrung (7) zur äußeren Mantellinie (9) der Blattwurzelschalenwand (3).

4. Befestigung nach Anspruch 1, **dadurch gekennzeichnet, dass**
der Abstand der inneren Zugankerbohrung (8) zur inneren Mantellinie (10) der Blattwurzelschalenwand (3) größer ist als der Abstand der äußeren Zugankerbohrung (7) zur äußeren Mantellinie (9) der Blattwurzelschalenwand (3).

## Claims

1. A fastening of rotor blades to the rotor hub (1) of wind power plants by means of transverse studs (4) and tie rods (5, 6) in the region of the blade root, wherein the transverse studs (4) are arranged such that they pass through the blade root shell wall (3) and the transverse studs (4) can be connected to a flange (2) of the hub (1) by means of the tie rods (5, 6) that are in the form of reduced-shaft bolts, **characterized in that**
each transverse stud (4) can be connected to the flange (2) of the rotor hub (1) by means of two tie rods (5, 6), wherein each tie rod (5, 6) is arranged in a separate tie rod bore (7, 8) in the blade root shell wall (3).

2. The fastening according to Claim 1, **characterized in that**
the distance between the tie rod bore (7) and the outer surface line (9) of the blade root shell wall (3) is equal to the distance between the tie rod bore (8) and the inner surface line (10) of the blade root shell wall (3).

3. The fastening according to Claim 1, **characterized in that**
the distance between the inner tie rod bore (8) and the inner surface line (10) of the blade root shell wall (3) is smaller than the distance between the outer tie rod bore (7) and the outer surface line (9) of the blade root shell wall (3).

4. The fastening according to Claim 1, **characterized in that**
the distance between the inner tie rod bore (8) and the inner surface line (10) of the blade root shell wall (3) is greater than the distance between the outer tie rod bore (7) and the outer surface line (9) of the blade root shell wall (3).

## Revendications

1. Fixation de pales de rotor sur le moyeu de rotor (1) d'éoliennes au moyen d'axes transversaux (4) et de tirants d'ancrage (5, 6) dans la zone de la base de pale, les axes transversaux (4) étant disposés en traversant toute la paroi de coque de base de pale (3) et pouvant être raccordés à une bride (2) du moyeu (1) au moyen des tirants d'ancrage (5, 6) sous forme de vis d'extension, **caractérisée en ce que**
chaque axe transversal (4) peut être raccordé par deux tirants d'ancrage (5, 6) à la bride (2) du moyeu de rotor (1), chaque tirant d'ancrage (5, 6) étant disposé dans un alésage de tirant d'ancrage (7, 8) séparé dans la paroi de coque de base de pale (3).

2. Fixation selon la revendication 1, **caractérisée en ce que**
les alésages de tirant d'ancrage (7, 8) présentent le même écart à la génératrice extérieure ou respectivement intérieure (9, 10) de la paroi de coque de base de pale (3).

3. Fixation selon la revendication 1, **caractérisée en ce que**
l'écart de l'alésage intérieur de tirant d'ancrage (8) à la génératrice intérieure (10) de la paroi de coque de base de pale (3) est plus petit que l'écart de l'alésage extérieur de tirant d'ancrage (7) à la génératrice extérieure (9) de la paroi de coque de base de pale (3).

4. Fixation selon la revendication 1, **caractérisée en ce que**
l'écart de l'alésage intérieur de tirant d'ancrage (8) à la génératrice intérieure (10) de la paroi de coque de base de pale (3) est plus grand que l'écart de l'alésage extérieur de tirant d'ancrage (7) à la génératrice extérieure (9) de la paroi de coque de base de pale (3).
